Europäisches Patentamt

European Patent Office

Office européen des brevets

(11) Publication number: **0 469 226 A1**

## EUROPEAN PATENT APPLICATION

(21) Application number: **90830366.2**

(51) Int. Cl.5: **A47C 31/10**

(22) Date of filing: **03.08.90**

(43) Date of publication of application:
**05.02.92 Bulletin 92/06**

(84) Designated Contracting States:
**AT BE CH DE DK ES FR GB GR LI LU NL SE**

(71) Applicant: **TAVIANI s.r.l.**
**Via Romaiano, 1**
**Ponte a Egola (Pisa)(IT)**

(72) Inventor: **Taviani, Francesco**
**Via di Levante, 12**
**San Miniato Basso (Pisa)(IT)**

(74) Representative: **Bardini, Marco Luigi et al**
**c/o Società Italiana Brevetti, Corso dei**
**Tintori, 25**
**I-50122 Firenze(IT)**

(54) A flexible covering for body supports and method of manufacturing thereof.

(57) A flexible covering for seats and in general for support planes of body parts comprising a plurality of beads (2) fixed to a flat network (1) formed by a plurality of parallel and equispaced plastic filaments (1a, 1b) arranged according two mutually perpendicular directions and fixed together by heat soldering or equivalent at their intersections occurring between adjacent beads. The method of assembling such a covering involves the use of a die (10) affording seatings (11) in which the beads are placed before the filaments are threaded through and then joined at the intersections.

Fig. 4

The present invention relates to a flexible covering for seats and support planes for body parts generally. The invention also relates to a method of manufacturing such a covering.

The prior art embraces flexible covering panels as used tipically for car seats, which consist in a plurality of rounded, and in particular, bead-like bodies affording an axial bore, strung together with cords or threads to form a flexible surface. In practice, flexible coverings of this type are manufactured by hand, networking the beads together one by one according to a prescribed pattern. Such an operation is notably laborious, needles to say, and the resulting labour costs have a considerable influence on the ultimate production cost of the finished article.

Currently, the beads used for this type of product are fashioned in wood, and afford an axial hole passing from end to end through which a thread of string of natural, artificial or synthetic fibre is inserted at the moment of making up the panel.

The object of the present invention is to provide a method for the manufacture of flexible coverings as outlined above, in which the steps of assembly can be partly or wholly automated, and a significant reduction thus gained in respect of the production costs of such articles.

The stated object is realized, according to invention, by ordering the beads in a plurality of parallel rows spaced apart at uniform distance one from the next, and with the beads of each row staggered diagonally from and disposed with their holes at right angles to those of the beads of the adjacent row, then threading thr rows of axially aligned beads with filaments of plastic material in such a manner that each filament crosses at right angles with another filament between the adjacent beads of each threaded row, and finally, securing the crossed filaments to one another.

More exactly, and preferably, the intersecting filaments will be fused together by heat sealing, though alternative methods would include ultrasonic welding, or mechanical retention using cross clips applied by automatic means.

The diagonally staggered arrangement of the beads and the alignment of their axial holes in mutually perpendicular directions is achieved utilizing a die comprising a plate in which parallel and equispaced rows of substantially oval seatings for said beads are formed, the seatings of adjacent rows being diagonally offset, with the axes of the seatings of one row disposed at right angles to the axes of the seatings of the row adjacent.

A further object of the present invention is to provide a flexible covering of the type described above, for seats and in general for planes of support of body parts characterized by a low manufacturing cost.

The novel feature of the flexible covering according to the invention consists in that the rounded bodies or beads of the covering are supported by a networked structure embodied as a plurality of filaments crossing at right angles and secured to one another at the intersections between adjacent beads.

The flexible covering according to the invention and the manufacturing method thereof will be more apparent with the following description of a not limiting, exemplifying embodiment of it, with the aid of the accompanying drawings, in which:

- fig. 1 is a partial plan view of the flexible covering according to the invention;
- fig. 2 shows a detail of the flexible covering of fig. 1;
- fig. 3 shows a component of the flexible covering according to the invention, in a cross section through III-III of fig. 2;
- fig. 4 is a schematic illustration of the preferred method of assembling a flexible covering according to the invention;
- fig. 5 is a schematic illustration of a possible variation on the method of assembly shown in fig. 4;
- fig. 6 is a schematic illustration of a further possible variation on the method of assembly shown in fig. 4.

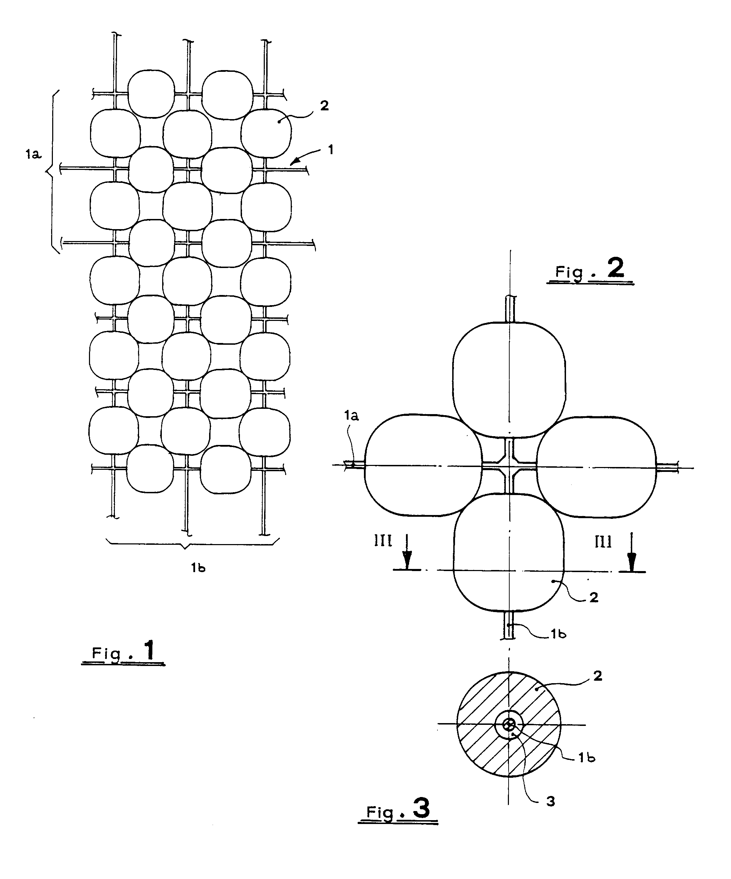

With reference to figs 1, 2 and 3 of the drawings, 1 denotes a network of substantially square links created from two sets of filaments denoted 1a and 1b, which are disposed mutually at right angles and secured one to another at their intersections; the filaments 1a and 1b can be fashioned in a suitably strong plastic material such as nylon, PVC or the like. Each side of each link forming the network 1 is occupied by a rounded body or bead 2 fashioned in wood or plastic, substantially oval in shape and with a through hole 8 occupying its greater, i.e. longitudinal axis, while the cross section of body 2 according to a plane perpendicular to the axis of through hole 3 is substantially circular. The hole 3 exhibits a diameter somewhat larger than that of the filament passing through it, such that the filament 1a or 1b and the bead 2 are freely and rotatably associated.

In a preferred embodiment of the covering, the two sets of filaments 1a and 1b are fused or welded at the points of intersection; alternatively, use might be made of clips or adhesive, or knots, or any other comparable expedient.

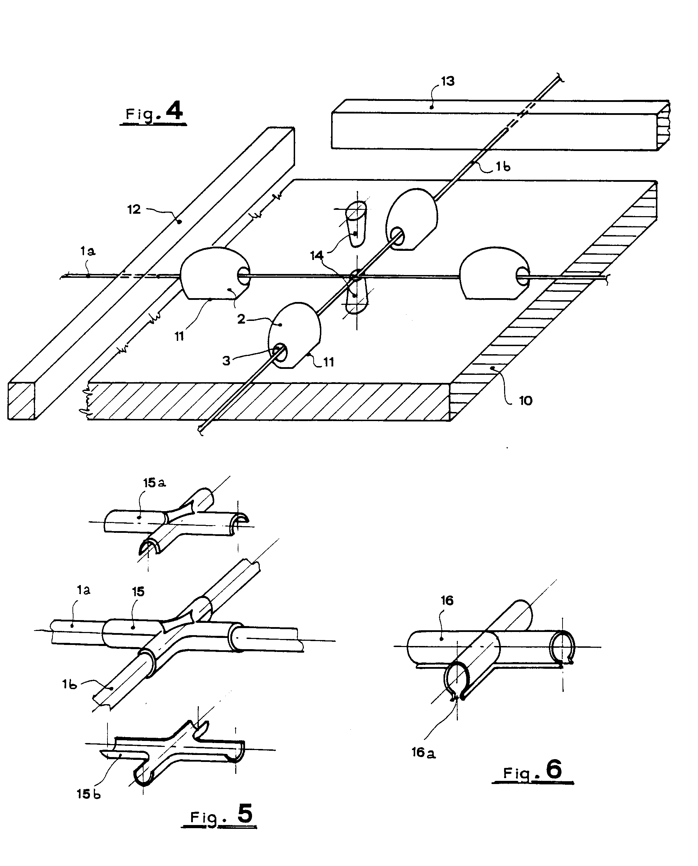

Assembly of a flexible covering according to the invention is effected using a die, illustrated schematically in fig. 4, that consists substantially in a bottom plate 10 of shape and dimensions to match the particular article in production (for example), a seat cover. The top face of the plate 10 affords a plurality of seatings 11 which are impressions, in effect, complementary to the shape of the beads 2.

Each seating 11 thus exhibits a substantially oval section having a longitudinal symmetry axis (greater axis). Spaced apart at regular distance one from the next and ordered in a plurality of parallel rows, the single seatings 11 are staggered diagonally from row to row and arranged such that the seating of one row have their greater axes at right angle to the axes of those of the adjacent row.

The depth of the seatings 11 is less than half the overall thickness or diameter of the beads 2, in such a way that the holes 3 lie either completely clear of or tangential to the face of plate 10 on which the seatings 11 are formed. The beads 2 can be positioned in a suitably oriented arrangement in seatings 11, fed for instance by an automatic loading system of conventional type.

Two adjacent sides of plate 10 are flanked by guides 12 and 13 serving to position the two sets of mutually perpendicular filaments 1a and 1b.

In practical terms, the single guide consists in a baffle affording a line of holes, each of which aligned with a corresponding row of seatings 11 at the same height as that ultimately occupied by the holes 3 of the beads 2. The filaments can be fed through the guides by an automatic loading system of conventional type.

To implement the method according to the invention, a first seat of the filaments, for example filaments 1a, will be threaded through the relative guides and beads, followed by the filaments disposed at right angles; before these second filaments 1b are inserted, a top die plate (not illustrated), of equal shapes as the bottom die plate 10, is placed over the latter to hold the already inserted filaments in contact with plate 10 and prevent any obstruction to the passage of the second filaments.

The bottom die plate 10 and the top die plate not shown are also fitted with a plurality of facing matched electrodes, of which one pair 14 is illustrated in fig. 4, each pair being located in correspondance to the point where two filaments 1a and 1b intersect. Once connected to an electrical power source, each pair of electrodes 14, cause the local heating of the filaments in coincidence with the intersection, and their soldering because of the pressure exerted by the electrodes.

In a variation on the method according to the invention (fig. 5), the two filaments 1a and 1b are fastened together at their intersection by means of a cross clip 15 consisting in two identical halves 15a and 15b applied respectively from above and below the plane occupied by the intersection, between the filaments 1a, 1b and secured one to the other with adhesive, or welded (e.g. ultrasonically).

In a further variation of the method according to the invention, the union of the two filaments at each intersection might be effected with a cross clip 16 as of the type shown in fig. 6. The clip 6 is fashioned in material possessing a limited degree of elasticity and is formed by four tubular and perpendicular arms. One face of the clip 16 affords a substantially flared opening 16a, enabling the tubular members to snap over two filaments 1a and 1b at their intersection and thus ensuring a stable connection.

The filaments 1a and 1b might also be secured one to the other at their point of intersection using adhesive, or by an automatic knotting operation, being clear that any other equivalent system may be adopted within the scope of teaching on which the method of the invention is based.

Advantageously, to avoid thermal expansion of the plastic filaments, particularly in the heat of summer, the filaments have a textile or other fibre core unaffected by changes in temperature.

When compared to conventional flexible coverings in which the supporting network is fashioned from string, plastic filament according to the invention affords the advantage that it will not unravel in the event of the net breaking at localized points; neither is dust generated by continuous rubbing of the cord against the wooden beads, a source of particular annoyance when occurring internally of a motor vehicle.

The flexible covering according to the invention can of course be packaged in a variety of shapes according to the use for which it is destined, e.g. as a seat cover, a mat for body massage, etc.. The finished article will be fitted around the relative external contour with rings or similar fittings through which, in the particular instance of the seat cover, to pass laces or rubber bands for fastening purposes.

Variations and/or modifications may be brought to the flexible covering and the relevant manufacturing method according to the present invention, without departing from the scope of the invention itself.

## Claims

1. A flexible covering for seats and in general for support planes of body parts, comprising a plurality of rounded bodies (2) uniformly distributed over and secured to a flat flexible support (1), characterized in that the flat flexible support consists in a network fashioned from a plurality of filaments (1a, 1b) in plastic material which are in an equispaced arrangement according two mutually perpendicular directions and fastened to one another in correspondance of their intersection between adjacent rounded bodies.

2. A flexible covering according to the claim 1, wherein the filaments (1a, 1b) are fused together at their points of intersection.

3. A flexible covering according to the claim 1, wherein the filaments (1a, 1b) are fastened together at their points of intersection with cross clips (15, 16).

4. A flexible covering according to the claim 1, wherein the filaments (1a, 1b) are bonded together at their points of intersection with adhesive.

5. A flexible covering according to claim 1, wherein the filaments (1a, 1b) are connected together at their points of intersection by means of knotting.

6. A flexible covering according to the preceding claims, wherein the filaments (1a, 1b) are embodied from a heat-sealable plastic and provided with a core material unaffected by changes in temperature.

7. A method of assembling a flexible covering embodied as a plurality or rounded bodies (2), each having a thorough hole (3) coinciding with its respective longitudinal axis of symmetry, unformly distributed over and secured to a flat flexible support (1), as in preceding claims, characterized in that it comprises the steps of:
   - preparing a flat die comprising a bottom die plate (10) with a plurality of seatings (11), each consisting substantially in the longitudinal impression of one rounded body and of depth less than half the transverse witdth of the body, the seating of two adjacent rows being diagonally staggered and oriented according two mutually perpendicular direction, said die further comprising flank guides (12, 13) to assist insertion of the filaments (1a, 1b);
   - arranging the rounded bodies in the seatings, in such a way as to dispose the rounded bodies of two adjacent rows diagonally staggered and with longitudinal axes lying according two perpendicular directions;
   - inserting filaments (1a, 1b) through each of the rows of rounded bodies aligned in one of said perpendicular directions;
   - covering the bottom die plate (10) with a top die plate affording identical and correspondingly arranged seatings, in such a way as to maintain the already inserted filaments in contact with the surface of said plate (10);
   - inserting filaments (1a, 1b) through said rounded bodies aligned in the other of said perpendicular directions;
   - securing the filaments one to another at their respective intersections.

8. A method according to the claim 6, wherein the filaments (1a, 1b) are heat-sealed one to another at their points of intersection by a plurality of electrodes (14) arranged in pairs and projecting respectively from said bottom die plate (10) and said top die plate at points equidistant from the seatings (11) formed thereon.

9. A method according to the claim 6, wherein the filaments (1a, 1b) are secured to one another at their points of intersection by means of clips.

10. A method as in claim 6, wherein the filaments (1a, 1b) are bonded to one another at their points of intersection with an adhesive.

11. A method as in claim 6, wherein the filaments (1a, 1b are connected together at their points of intersection by means of knotting.

1a

2

1

1b

<u>Fig . 1</u>

<u>Fig . 2</u>

1a

III

III

2

1b

2

1b

3

<u>Fig . 3</u>

Fig. **4**

13

1b

12

1a

14

2

3

11

11

10

15a

1a

15

1b

15b

Fig. **5**

16

16a

Fig. **6**

European
Patent Office

EUROPEAN SEARCH
REPORT

Application Number

EP 90 83 0366

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 152 322 (KRASZEWSKI et al.) <br> * Figures 1-4 * <br> – – – | 1-3,5 | A 47 C 31/10 <br> B 29 C 45/14 |
| Y | GB-A-1 410 945 (BRAMLEY) <br> * Figure 1 * <br> – – – | 1-3 | |
| A | FR-A-2 229 525 (BRAMLEY) <br> * Figures 1-3 * <br> – – – | 1-3 | |
| A | GB-A-1 110 793 (GILBERT et al.) <br> * Figures 1-8 * <br> – – – | 1-3 | |
| A | DE-C-705 243 (SWAROVSKI) <br> * Figures 1-6 * <br> – – – – – | 1,3,7 | |

TECHNICAL FIELDS
SEARCHED (Int. Cl.5)

A 47 C
B 29 C

The present search report has been drawn up for all claims

| Place of search | Date of completion of search | Examiner |
|---|---|---|
| The Hague | 13 March 91 | GATTI C. |